# EUROPEAN PATENT SPECIFICATION

(11) **EP 3 579 786 B1**
(45) Date of publication and mention of the grant of the patent: **23.09.2020**
(21) Application number: 18704853.3
(22) Date of filing: 05.02.2018
(51) Int. Cl.: A61C 13/15

(54) **A DENTAL LIGHT IRRADIATION DEVICE**
ZAHNÄRZTLICHE LICHTBESTRAHLUNGSVORRICHTUNG
DISPOSITIF DENTAIRE D'IRRADIATION LUMINEUSE

(30) Priority: 10.02.2017 EP 17155547
(43) Date of publication of application: 18.12.2019
(73) Proprietor: 3M Innovative Properties Company, Saint Paul, Minnesota 55133-3427 (US)
(72) Inventor: GERLACH, Korbinian, 82229 Seefeld (DE); SCHMID, Rudolf, 82229 Seefeld (DE); WELKER, Stefan, 82229 Seefeld (DE); KELZ, Ralf, 82229 Seefeld (DE)
(74) Representative: Vossius & Partner Patentanwälte Rechtsanwälte mbB
(86) International application number: PCT/US2018/016847
(87) International publication number: WO 2018/148143

(56) References cited:
- WO-A1-2016/153834
- US-A1- 2007 190 479
- US-A1- 2015 205 279
- US-A1- 2015 250 572
- US-A1- 2016 287 351

## Description

### Field of the Invention

The invention relates to a dental light irradiation device that has a first light source for emitting blue light, a camera and at least a first detector. In particular the device of the invention is operable in a sleep mode, a non-camera mode and in a camera mode, and the camera mode can be activated only in the non-camera mode.

### Background Art

Light hardenable or light curable materials are widely used in dentistry for the restoration of teeth. Many of such materials are made to provide optical instructions that resemble those of natural teeth. Further such materials typically can be placed precisely and conveniently, can be hardened instantly, and the hardened material is typically relatively durable. Accordingly these materials are favored alternatives to less pleasant looking and over time self-hardening materials, like for example amalgam.

Light hardenable materials often include a polymerizable matrix material and filler materials including colorants, and may initially be generally soft or flowable so that they can be applied in a desired location and shape. For example, for restoration of a tooth the dental material may be filled into a tooth cavity and shaped so that the restored tooth resembles a natural tooth. Once the desired shape has been formed, the material may be cured by exposing it to light of a desired wavelength. The light typically activates photoinitiators in the dental material that cause the matrix material to polymerize.

The use of dental materials that are hardenable by blue light of a wavelength of between about 450 and 500 nm (nanometers) has become common in dentistry. Accordingly, light-emitting devices used for hardening such dental materials typically emit light at such wavelengths. Such a light-emitting device is for example available from 3M Deutschland GmbH, Germany, under the trade designation Elipar™ S10.

Further, it has been proposed provide a dental light device with a camera. For example, WO 2014/043488 discloses a dental irradiation device having a first light emitting unit for emitting blue light for light hardening of a dental material and second light emitting unit. The device further has an image sensing unit. The device can be used for simultaneous illumination and image capturing.

With the addition of a camera additional functions of the camera and functions that are enabled by the combination of the camera and the light for polymerization are desired by the users. On the other hand there is a general desire to keep the operation of the device as easy as possible.

US 2015/250572 A1 discloses a visualization of an area sensed by an image sensing unit. The visualization includes displaying the images real time on a computer screen.

### Summary of the Invention

The invention relates to a dental light irradiation device according to claim 1. The dental light irradiation device comprises a first light source for emitting blue light, a camera and at least a first detector.

The device is operable in a camera mode in which the camera is activated and in a non-camera mode in which the camera is deactivated. Further, in the non-camera mode a user input on the first detector activates the camera mode.

The invention is advantageous in that it provides a dental light irradiation device which provides functions for curing a light hardenable dental material in both, the non-camera mode and the camera mode. Other than some prior art devices which can be used for curing or, alternatively, for visualization, the present invention enables the visualization in both the non-camera mode and the camera mode. Further, the device helps maximizing the user comfort in that the camera mode is entirely optional. Thus, in an environment where the camera mode cannot be used, for example because no display is available, the dental light irradiation device can nevertheless be used for curing dental materials without restrictions.

A user input on a detector, as referred to herein, (for example the first detector) depends on the type of detector used in the dental light irradiation device. In case a touch sensor is used a user input corresponds to touching and releasing the touch sensor. In case a push button is used a user input corresponds to pushing and releasing the push button. The user input may comprise touching/pushing and releasing the touch sensor/push button one or more times (for example double push/release). Other sensors are possible, like for example a voice sensor. In the following it may be referred to a push button to simplify explanation although other types of detectors may be likewise used.

For the purpose of the present specification the term "blue light" refers to light having a wavelength within the range of about 430 nm to 500 nm, preferably within a range of about 430 nm to 480 nm. Blue light preferably predominantly consists of light within a range of about 430 nm to 480 nm. The blue light may particularly not comprise light having a wavelength outside the range of about 430 nm to 480 nm at a substantial intensity or at all. In particular, blue light may have a first portion of light within a range of about 430 nm to 480 nm and preferably does not have a significant second light portion within a range of 570 nm and 590 nm, wherein the maximum intensity of the second portion of light is preferably less than 10% and more preferably less than 1% of the maximum intensity of the first portion of light. Further blue light may not have a significant third light portion within the spectrum of visible light outside the range of 430 nm and 480 nm and outside the range of 570 nm to 590 nm, wherein the maximum intensity of any third portion of light is preferably less than 25% and more preferably less than 20% of the maximum intensity of the first portion of light.

For the purpose of the present specification the term "white light" refers to light having a wavelength within a range of about 380 nm to 780 nm. Although white light may also comprise light at wavelengths overlapping with the range of wavelengths of blue light, the white light preferably does not predominantly consist of light within that range but has significant portions of visible light at wavelengths outside that range.

Any user input may represent an instruction that can be recognized by the device. For example the duration of the user input, for example the duration of the time between the push and next release of a button may be interpreted as a particular instruction. The dental light irradiation device therefore preferably comprises electronic circuitry that is configured to execute a program by which user inputs can be evaluated for the presence of any instruction. The light device preferably has a memory in which different user inputs are assigned to particular instructions.

Preferably, the camera mode has a default operation in which the dental light irradiation device transmits images captured by the camera to a receiving external device at real time (or live), preferably to a display or to a device that provides a display. Such an external device may be a tablet or other computer with a display, for example. Preferably the dental light irradiation device is set up to fall back to in the default real-time operation in case no other operation under the camera mode is activated.

In the camera mode a detection of a "freeze image" instruction of the user input via the first detector triggers a freeze of an image captured by the camera. The freeze of the image may be performed in that the image that the camera captures at the moment at which the "freeze image" instruction is recognized is stored in the device and in that the stored image is continuously transmitted to the external device instead of transmitting the real-time or live image. It is further possible that the dental light irradiation device forwards the "freeze image" instruction or sends a new "freeze image" instruction to the external device and the external device manages the display of the frozen image at its end. Further, in the camera mode a detection of a "camera-off" instruction of the user input via the first detector causes the device to switch in the non-camera mode.

In one embodiment the dental light irradiation device further comprises a sleep mode. In the sleep mode the camera and the first light source are deactivated. The non-camera mode is preferably activated by waking up the device from the sleep mode. This means that the dental light irradiation device preferably wakes up in the non-camera mode in which the camera is deactivated and that the dental light irradiation device must be switched into the camera mode by the user.

In one embodiment the dental light irradiation device comprises a gyro sensor that in the sleep mode monitors an acceleration of the device and causes the non-camera mode to activate upon sensing an acceleration. The dental light irradiation device may activate the non-camera mode if a sensed acceleration exceeds a predetermined threshold value.

In a preferred embodiment the dental light irradiation device further comprises a second detector. The second detector is preferably provided for controlling operations of the first light source. Preferably, in either of the non-camera mode and the camera mode a user input on the second detector activates a cure operation of the dental light irradiation device. In the cure operation the first light source is activated or switched on. The cure operation preferably comprises at least a default cure operation and a tack cure operation. In either of the non-camera mode and the camera mode a detection of a "start cure" instruction of the user input via the second detector preferably activates the default cure operation, and a detection of a "tack cure" instruction of the user input via the second detector preferably activates the tack cure operation.

In an embodiment in the default cure operation the first light source is automatically activated for a pre-determined first time period after which the first light source is automatically deactivated. Further, in the tack cure operation the first light source is preferably automatically activated for a pre-determined second time period after which the first light source is automatically deactivated. In this regard the term "automatically" means that the first light source is activated by control of the dental light irradiation device in consequence of recognizing the associated instruction from the user input. The second time period is preferably shorter than the first time period. For example the first time period may be selectable between at least 5, 10, 15 and 20 seconds, and the second time period may be 1 or about 1 second.

In one embodiment the dental light irradiation device further comprises a third detector for adjusting or pre-selecting the first time period.

In a further embodiment the first, second and the third detector each are formed by or comprise at least one push button or touch sensor. Each of the first, second and third detector may be a first, second and third push button, respectively or a first, second and third sensor, respectively. Thus, the dental light irradiation device may comprise three buttons which form the first, second and third detector. The second detector may comprise two push buttons or two touch sensors arranged on opposite sides of the dental light irradiation device. In this case the dental light irradiation device comprises four buttons, and two of the four buttons form the second detector. A user input may be provided on either one or both of the two buttons that form the second detector. For example, a user input may be provided on only one of the two buttons. This facilitates the operation of the dental light irradiation device if used in a patient's mouth. In particular, due to the arrangement of the two push buttons or two touch sensors on opposite sides of the dental light irradiation device one of the sensors/buttons is oriented (and thus visible) to a user regardless of whether the device is used for curing a dental material in a tooth in the upper or in the lower jaw of the patient.

Disclosed herein (and not claimed) is further a dental light irradiation device that comprises a first light source for emitting blue light and a detector that comprises two push buttons or two touch sensors arranged on opposite sides of the dental light irradiation device. Such a dental light irradiation device may not have a camera and a first detector.

In an embodiment of the invention the "start cure" and the "tack cure" instruction are each based on a duration for which a user input is maintained on the second detector, wherein the "start cure" instruction is associated to a first duration and the "tack cure" instruction is associated to a different second duration.

In a further embodiment a detection of a "video start" instruction of the user input via the first detector triggers the recording of a video via the camera. The "video start" instruction is preferably only enabled while the dental light irradiation device is operating in the default real-time operation. The "video start" instruction may be characterized by a double push and release on the first push button within a predetermined time, for example with 1 second. Further, during the recording of the video a detection of a "video stop" instruction of the user input via the first detector preferably triggers the recording of the video to stop. The "video stop" instruction may be characterized by any further user input on the first detector.

In a further embodiment, a detection of a "camera-off" instruction of the user input via the first detector causes the device to switch in the non-camera mode. The "camera-off' instruction is preferably only enabled while the dental light irradiation device is operating in the default real-time operation.

In a further embodiment the dental light irradiation device may have the first detector, optionally the third detector but not the second detector. For example the device may only have two buttons. One of the two buttons may have multiple functions for switching between the camera. In this embodiment in the sleep mode a detection of a "camera-on" instruction of the user input via the first detector activates the camera mode, and the detection of a "start cure" instruction of the user input via the first detector activates a cure operation of the dental light irradiation device, wherein in the cure operation the first light source is activated. In this embodiment the camera function and the function of the first light source are controlled via operation of the same first detector. This allows for minimizing the amount of detectors in the device.

In one embodiment the dental light irradiation device further comprises a second light source for emitting white light. The second light source may be activated in association with an activation of the camera. For example, the second light source may be activated simultaneously with the activation of the camera by control of the dental light irradiation device. Further, in the sleep mode the camera and the first and second light source are deactivated.

In a further embodiment the first and second light source and the camera are arranged adjacent each other and adjacent an end of an intra-oral tip of the dental light irradiation device. In particular, the first and second light source may be arranged in the end of the intra-oral tip. The first light source may comprise one or more blue LEDs (Light Emitting Diodes) that are arranged in a periphery around the camera. The second light source may comprise one or more white LEDs (Light Emitting Diodes) that are also arranged in a periphery around the camera. The white and blue LEDs may be arranged circumferentially in an alternate fashion.

In a further embodiment the dental light irradiation device comprising a wireless communication interface for transmitting image data captured by the camera to a wireless network. The wireless data transmission may be based on standards like Bluetooth™ or IEEE 802.11 standards. It is however possible, to provide a dental light irradiation device which has a wired interface for wire-based data transfer. Preferably the data transmission is enabled in the camera mode only. Thus, if the dental light irradiation device is used in the non-camera mode battery power for the communication interface can be saved.

The following table summarizes the preferred functionality of the dental light irradiation device of the invention.

### Brief Description of the Figures

- Fig. 1: is a perspective view of a dental light irradiation device according to an embodiment of the invention; and
- Fig. 2: is a flow chart illustration certain functions of the dental light irradiation device according to an embodiment of the invention.

### Detailed Description of the Invention

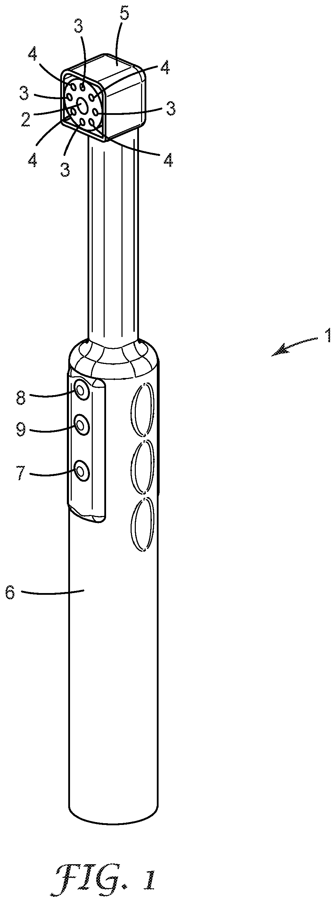

Fig. 1 shows a dental light irradiation device 1. The dental light irradiation device 1 has a camera 2, a first light source 3 for emitting blue light and a second light source 4 for emitting white light. The first light source 3 comprises a plurality of blue LEDs (Light Emitting Diodes), but may in another example be formed of a single blue LED. Further, the second light source 4 comprises a plurality of white LEDs. Again, alternatively the second light source 4 may be formed of a single white LED. The camera 2 may be a CCD or CMOS based camera, or may be based on any other appropriate technology. In the example, the camera 2 as well as the first and second light source 3, 4 are accommodated in a tip portion 5 of the dental light irradiation device 1. Other configurations are possible. For example, the camera, the first and/or the second light source may be accommodated in a handle portion 6 of the dental light irradiation device 1 with (an) associated light guide(s) extending between the tip portion 5 and the camera, the first and/or the second light source.

The dental light irradiation device 1 in the example is an overall wireless device, but may in another example be wired. In the example the light irradiation device 1 has a rechargeable battery (not visible). For charging the battery a charging device may be provided (not shown) by which the battery can be charged. For charging the battery the light irradiation device 1 may be connected to the charging device in a contactless manner or by electrical contact-based connection.

The dental light irradiation device 1 has a first, second and third detector for operation the device 1 as described in the following. In the example, the first, second and third detector are provided in the form of a first, second and third push button. Further, the dental light irradiation device 1 has a gyro sensor (not visible) for monitoring a movement or acceleration of the device 1 and for initiating operations of the device as described in the following.

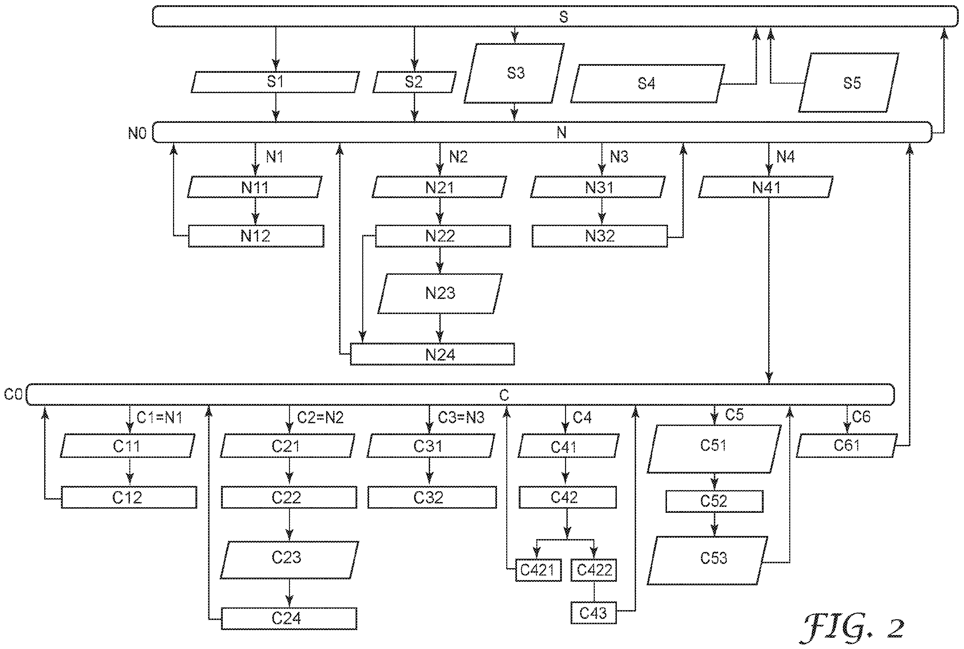

Fig. 2 shows a flowchart illustrating the function of the dental light irradiation device. The dental light irradiation device is basically operable in two alternative modes, namely a camera mode C and a non-camera mode N. In addition the dental light irradiation device can operate in a sleep mode S.

In the sleep mode S generally the camera and the first and second light source are deactivated. The dental light irradiation device automatically activates the sleep mode S if no user input is detected via the first, second and third detector for a predetermined idle time period, for example of 5 minutes (S4). Other time periods may be predetermined as appropriate.

Further, the dental light irradiation device preferably activates the sleep mode S if, in addition to the absence of any user input on the first, second and/or third detector, the gyro sensor does not sense any motion or acceleration of the device within the predetermined idle time period (S1).

Independent of the automatic activation of the sleep mode due to the absence of a user input or movement of the device, the dental light irradiation device is set up to preferably immediately switch into the sleep mode upon connecting the device to a charging unit (S5). In case a charging unit is connected and recognized by the device an automatic charging program is activated which checks the charge state of the battery and charges the battery dependent thereon.

Once the device is in the sleep mode S the device is waked up in case one of the following incidents occur:
- the device is disconnected from the charging unit (S3),
- a movement of the device is detected by the gyro sensor or
- in case a user input is detected via one of the first, second and third detectors (S2).
Waking up the device causes, by default, the non-camera mode to activate. In the non-camera mode the camera is deactivated (switched off). However, the non-camera mode provides several operations N0, N1, N2, N3, N4 of the device that can be selectively activated under the non-camera mode.

N0 in the flowchart designates an idle operation of the dental light irradiation device. In the idle operation N0 the camera and the first and second light source are deactivated. However, the first, second and third detectors are monitored for a user input.

N1 in the flowchart designates a curing time preselection operation for adjusting a first time period. The first time period is the time period for which the first light source is automatically activated and after which the first light source is automatically deactivated. The curing time preselection operation N1 is activated in case a user input is detected on the third detector. Each user input (N11) on the third detector, for example each push and release on the third push button, may increase (N12) the first time period by a certain time increment, for example 5 seconds. Once a maximum time period is reached (for example 20 seconds) a further user input on the third detector preferably causes the first time period to be reset on a minimum time period (for example 5 seconds). The dental light irradiation device automatically returns in the idle operation N0 once the curing time preselection operation N1 ends.

N2 designates a default cure operation. In case a user input is detected via the second detector the device evaluates that user input for a presence of a "start cure" instruction. The "start cure" instruction in the example is characterized by a duration between a push and the next release of the second push button that is below a predetermined time, in the example below one second. This means that the "start cure" instruction is recognized in case the duration of the user input is shorter than one second. In case the "start cure" instruction is recognized (N21) the device activates the default cure mode in which the first light source is activated (N22) for the first time period. The operation of the first light source may be interrupted (N23) in case a further user input is detected on the second detector. Otherwise the first light source is automatically deactivated after lapse of the first time period (N24). The dental light irradiation device automatically returns in the idle operation N0 once the default cure operation N2 ends.

N3 designates a tack cure operation. In case a user input is detected via the second detector the device further evaluates that user input for a presence of a "tack cure" instruction. The "tack cure" instruction in the example is characterized by a duration between a push and the next release of the second push button that exceeds a predetermined time, in the example reaches one second or more. This means that the "tack cure" instruction is recognized in case the user input lasts one second or more. In case the "tack cure" instruction is recognized (N31) the device activates the tack cure mode in which the first light source is activated (N32) for one second before the first light source is automatically switched off. The dental light irradiation device automatically returns in the idle operation N0 once the tack cure operation N3 ends.

N4 designates the activation of the camera mode. In case a user input of the first detector, for example a push and release on the first push button, is detected (C41) the device is activated in the camera mode C in which the camera is switched on. By default the camera mode C operates in a real-time camera operation (C0) in which images captured by the camera are transmitted real-time to a display, for example a computer screen or tablet. The image transmission is preferably performed by a wireless data transmission.

The camera mode provides several operations C0, C1, C2, C3, C4, C5 and C6 of the device that can be selectively activated under the camera mode.

C1, C2, and C3 are identical to the operations N1, N2 and N3, respectively, although in C1 to C3 the camera is activated while in N1 to N3 the camera is deactivated. The same applies for C11, C12 which is identical to N11, N12, respectively. C21, C22, C23, C24 is identical to N21, N22, N23, N24, respectively, and C31, C32 is identical to N31, N32, respectively.

C4 designates an image capturing operation. In case a user input is detected on the first detector that user input is evaluated for the presence of a "freeze image" instruction (C41). In the example the "freeze image" instruction is characterized by a duration between a push and the next release of the first push button that is shorter than one second. Once the "freeze image" instruction is recognized the device is switched in an image freeze operation C42. In the image freeze operation the image displayed at the moment at which the "freeze image" instruction was recognized is frozen. For example, the transmission of the image captured at the moment the "freeze image" instruction was recognized may be maintained (while the transmission of the real-time image is suspended). In case a user input is detected on the first detector during the freeze operation C42 the device switches either back to the real-time camera operation C0 or to a snapshot operation C43 in which a photo of the frozen image is stored, depending on the input instruction recognized from the user input. For example, in case the input instruction is characterized by a push and release on the first push button for a duration of below one second (C421), the device switches back to the real-time camera operation C0. In case the input instruction is characterized by a duration between the push and release of one second or more of the first push button (C422), the snapshot operation C43 is activated. Once the photo is taken and stored the snapshot operation automatically finishes and the device returns to the real-time camera mode C0.

C5 designates an optional video operation. In case a user input is detected on the first detector that user input is evaluated for the presence of a "video start" instruction (C51). In the example the "video start" instruction is characterized by a double push and release on the first push button (similar to a double click on a computer). The recognition of the "video start" instruction triggers the recording of a video from the images captured by the camera (C52). The recording stops as soon as a further user input is detected (C53) on the first detector. The device returns to the real-time camera mode C0 automatically after.

C6 designates a camera off operation. In case a user input is detected on the first detector that user input is evaluated for the presence of a "camera-off" instruction (C61). In the example the" camera-off" instruction is characterized by a duration between a push and release of the first push button of more than three seconds.

During the execution of the default cure operation N2 or C2 the switching between the camera mode and the non-camera mode is disabled. In particular, most preferably during the execution of the default cure operation C2 in the camera mode switching to the non-camera mode is disabled. This means that an operation of the first detector during the execution of the default cure mode does not have any effect. Thus, it can be prevented that a user, for example a dentist, switches the to the non-camera mode while monitoring the curing of a dental material in a patient's mouth on a display. Accordingly, due to the fact that an eye protection is not required for monitoring the curing via the display, it can be prevented that the user starts monitoring the curing on a display without eye protection but suddenly is required to directly look towards intense light emitted by the dental light irradiation device. Therefore, the safety in handling of the device is maximized.

## Claims

1. A dental light irradiation device (1) comprising a first light source (3) for emitting blue light, a camera (2) and at least a first detector, wherein the device is operable in a camera mode (C) in which the camera is activated and in a non-camera mode (N) in which the camera is deactivated, wherein in the non-camera mode (N) a user input on the first detector activates the camera mode (C), wherein in the camera mode (C) a detection of a "freeze image" instruction of the user input via the first detector triggers a freeze of an image captured by the camera (2) and a detection of a "camera-off" instruction of the user input via the first detector causes the device (1) to switch in the non-camera mode (N).

2. The dental light irradiation device of claim 1, further comprising a sleep mode (S), in which the camera (2) and the first light source (3) are deactivated, wherein the non-camera mode (N) is activated by waking up the device (1) from the sleep mode (S).

3. The dental light irradiation device (1) of claim 2, further comprising a gyro sensor that in the sleep mode (S) monitors an acceleration of the device (1) and causes the non-camera mode (N) to activate upon sensing an acceleration.

4. The dental light irradiation device (1) of any of the preceding claims, further comprising a second detector, wherein in either of the non-camera mode (N) and the camera mode (C) a user input on the second detector activates a cure operation of the dental light irradiation device, wherein in the cure operation the first light source is activated.

5. The dental light irradiation device of claim 4, wherein the cure operation comprises at least a default cure operation and a tack cure operation, wherein in either of the non-camera mode (N) and the camera mode (C) a detection of a "start cure" instruction of the user input via the second detector activates the default cure operation, and a detection of a "tack cure" instruction of the user input via the second detector activates the tack cure operation, wherein in the default cure operation the first light source is automatically activated for a pre-determined first time period after which the first light source is automatically deactivated, and wherein in the tack cure operation the first light source is automatically activated for a pre-determined second time period after which the first light source is automatically deactivated, and wherein the second time period is shorter than the first time period.

6. The dental light irradiation device of claim 5, further comprising a third detector for adjusting or pre-selecting the first time period.

7. The dental light irradiation device of claim 6, wherein the first and the third detector each comprise at least one push button or touch sensor, and wherein the second detector comprises two push buttons or two touch sensors arranged on opposite sides of the dental light irradiation device.

8. The dental light irradiation device of any of the claims 5 to 7, wherein the "start cure" and the "tack cure" instruction are each based on a duration for which a user input is maintained on the second detector, wherein the "start cure" instruction is associated to a first duration and the "tack cure" instruction is associated to a different second duration.

9. The dental light irradiation device of any of the preceding claims, wherein a detection of a "video start" instruction of the user input via the first detector triggers the recording of a video via the camera, and a detection of a "camera-off" instruction of the user input via the first detector causes the device to switch in the non-camera mode (N).

10. The dental light irradiation device of claim 2 or 3, wherein in the sleep mode a detection of a "camera-on" instruction of the user input via the first detector activates the camera mode (C), and the detection of a "start cure" instruction of the user input via the first detector activates a cure operation of the dental light irradiation device, wherein in the cure operation the first light source is activated.

11. The dental light irradiation device of any of the preceding claims, further comprising a second light source (4) for emitting white light.

12. The dental light irradiation device of claim 11, wherein the first and second light source (3, 4) and the camera (2) are arranged adjacent each other and adjacent an end of an intra-oral tip of the dental light irradiation device.

13. The dental light irradiation device of any of the preceding claims, comprising a wireless communication interface for transmitting image data captured by the camera to a wireless network.

## Patentansprüche

1. Eine zahnärztliche Lichtbestrahlungsvorrichtung (1), aufweisend eine erste Lichtquelle (3) zum Emittieren von blauem Licht, eine Kamera (2) und mindestens einen ersten Detektor, wobei die Vorrichtung in einem Kameramodus (C), in dem die Kamera aktiviert ist, und in einem Nichtkameramodus (N), in dem die Kamera deaktiviert ist, betreibbar ist, wobei eine Benutzereingabe an dem ersten Detektor in dem Nichtkameramodus (N) den Kameramodus (C) aktiviert, wobei eine Detektion einer Anweisung "Bild einfrieren" der Benutzereingabe über den ersten Detektor in dem Kameramodus (C) ein Einfrieren eines durch die Kamera (2) aufgenommenen Bildes auslöst und eine Detektion einer Anweisung "Kamera aus" der Benutzereingabe über den ersten Detektor bewirkt, dass die Vorrichtung (1) in den Nichtkameramodus (N) umschaltet.

2. Die zahnärztliche Lichtbestrahlungsvorrichtung nach Anspruch 1, ferner aufweisend einen Schlafmodus (S), in dem die Kamera (2) und die erste Lichtquelle (3) deaktiviert sind, wobei der Nichtkameramodus (N) durch Aufwecken der Vorrichtung (1) aus dem Schlafmodus (S) aktiviert wird.

3. Die zahnärztliche Lichtbestrahlungsvorrichtung (1) nach Anspruch 2, ferner aufweisend einen Gyrosensor, der eine Beschleunigung der Vorrichtung (1) in dem Schlafmodus (S) überwacht und bewirkt, dass der Nichtkameramodus (N) beim Erfassen einer Beschleunigung aktiviert wird.

4. Die zahnärztliche Lichtbestrahlungsvorrichtung (1) nach einem der vorstehenden Ansprüche, ferner aufweisend einen zweiten Detektor, wobei entweder in dem Nichtkameramodus (N) oder dem Kameramodus (C) eine Benutzereingabe an dem zweiten Detektor einen Härtungsbetrieb der zahnärztlichen Lichtbestrahlungsvorrichtung aktiviert, wobei die erste Lichtquelle in dem Härtungsbetrieb aktiviert wird.

5. Die zahnärztliche Lichtbestrahlungsvorrichtung nach Anspruch 4, wobei der Härtungsbetrieb zumindest einen Standard-Härtungsbetrieb und einen Klebe-Härtungsbetrieb aufweist, wobei entweder in dem Nichtkameramodus (N) oder dem Kameramodus (C) eine Detektion einer Anweisung "Härten starten" der Benutzereingabe über den zweiten Detektor den Standard-Härtungsbetrieb aktiviert, und eine Detektion einer Anweisung "Klebehärtung" der Benutzereingabe über den zweiten Detektor den Klebe-Härtungsbetrieb aktiviert, wobei die erste Lichtquelle in dem Standard-Härtungsbetrieb automatisch einen vorbestimmten ersten Zeitraum lang aktiviert wird, nach dem die erste Lichtquelle automatisch deaktiviert wird, und wobei die erste Lichtquelle in dem Klebe-Härtungsbetrieb automatisch einen vorbestimmten zweiten Zeitraum lang aktiviert wird, nach dem die erste Lichtquelle automatisch deaktiviert wird, und wobei der zweite Zeitraum kürzer als der erste Zeitraum ist.

6. Die zahnärztliche Lichtbestrahlungsvorrichtung nach Anspruch 5, ferner aufweisend einen dritten Detektor zum Einstellen oder Vorauswählen des ersten Zeitraums.

7. Die zahnärztliche Lichtbestrahlungsvorrichtung nach Anspruch 6, wobei der erste und der dritte Detektor jeweils mindestens eine Drucktaste oder einen Berührungssensor aufweisen, und wobei der zweite Detektor zwei Drucktasten oder zwei Berührungssensoren aufweist, die auf gegenüberliegenden Seiten der zahnärztlichen Lichtbestrahlungsvorrichtung angeordnet sind.

8. Die zahnärztliche Lichtbestrahlungsvorrichtung nach einem der Ansprüche 5 bis 7, wobei die Anweisung "Härten starten" und die Anweisung "Klebehärten" jeweils auf einer Dauer basieren, während der eine Benutzereingabe an dem zweiten Detektor aufrechterhalten wird, wobei die Anweisung "Härten starten" einer ersten Dauer zugeordnet ist und die Anweisung "Klebehärten" einer anderen, zweiten Dauer zugeordnet ist.

9. Die zahnärztliche Lichtbestrahlungsvorrichtung nach einem der vorstehenden Ansprüche, wobei eine Detektion einer Anweisung "Video starten" der Benutzereingabe über den ersten Detektor das Aufzeichnen eines Videos über die Kamera auslöst, und eine Detektion einer Anweisung "Kamera aus" der Benutzereingabe über den ersten Detektor bewirkt, dass die Vorrichtung in den Nichtkameramodus (N) umschaltet.

10. Die zahnärztliche Lichtbestrahlungsvorrichtung nach Anspruch 2 oder 3, wobei eine Detektion einer Anweisung "Kamera aus" der Benutzereingabe über den ersten Detektor in dem Schlafmodus den Kameramodus (C) aktiviert, und die Detektion einer Anweisung "Härten starten" der Benutzereingabe über den ersten Detektor einen Härtungsbetrieb der zahnärztlichen Lichtbestrahlungsvorrichtung aktiviert, wobei die erste Lichtquelle in dem Härtungsbetrieb aktiviert wird.

11. Die zahnärztliche Lichtbestrahlungsvorrichtung nach einem der vorstehenden Ansprüche, ferner aufweisend eine zweite Lichtquelle (4) zum Emittieren von weißem Licht.

12. Die zahnärztliche Lichtbestrahlungsvorrichtung nach Anspruch 11, wobei die erste und die zweite Lichtquelle (3, 4) und die Kamera (2) einander benachbart und einem Ende einer intraoralen Spitze der zahnärztlichen Lichtbestrahlungsvorrichtung benachbart angeordnet sind.

13. Die zahnärztliche Lichtbestrahlungsvorrichtung nach einem der vorstehenden Ansprüche, aufweisend eine drahtlose Kommunikationsschnittstelle zum Übertragen von durch die Kamera aufgenommenen Bilddaten an ein drahtloses Netzwerk.

## Revendications

1. Dispositif dentaire d'irradiation lumineuse (1) comprenant une première source de lumière (3) pour émettre de la lumière bleue, une caméra (2) et au moins un premier détecteur, dans lequel le dispositif est opérationnel dans un mode caméra (C) dans lequel la caméra est activée et dans un mode non-caméra (N) dans lequel la caméra est désactivée, dans lequel dans le mode non-caméra (N) une saisie utilisateur sur le premier détecteur active le mode caméra (C), dans lequel dans le mode caméra (C) une détection d'une instruction de « gel d'image » de la saisie utilisateur par l'intermédiaire du premier détecteur déclenche un gel d'une image capturée par la caméra (2) et une détection d'une instruction de « désactivation de caméra » de la saisie utilisateur par l'intermédiaire du premier détecteur amène le dispositif (1) à commuter dans le mode non-caméra (N).

2. Dispositif dentaire d'irradiation lumineuse selon la revendication 1, comprenant en outre un mode veille (S), dans lequel la caméra (2) et la première source de lumière (3) sont désactivées, dans lequel le mode non-caméra (N) est activé en réveillant le dispositif (1) depuis le mode veille (S).

3. Dispositif dentaire d'irradiation lumineuse (1) selon la revendication 2, comprenant en outre un capteur gyroscopique qui dans le mode veille (S) surveille une accélération du dispositif (1) et amène le mode non-caméra (N) à s'activer à la détection d'une accélération.

4. Dispositif dentaire d'irradiation lumineuse (1) selon l'une quelconque des revendications précédentes, comprenant en outre un deuxième détecteur, dans lequel dans l'un ou l'autre du mode non-caméra (N) et du mode caméra (C) une saisie utilisateur sur le deuxième détecteur active une opération de durcissement du dispositif dentaire d'irradiation lumineuse, dans lequel dans l'opération de durcissement la première source de lumière est activée.

5. Dispositif dentaire d'irradiation lumineuse selon la revendication 4, dans lequel l'opération de durcissement comprend au moins une opération de durcissement par défaut et une opération de durcissement collant, dans lequel dans l'un ou l'autre du mode non-caméra (N) et du mode caméra (C) une détection d'une instruction de « démarrage de durcissement » de la saisie utilisateur par l'intermédiaire du deuxième détecteur active l'opération de durcissement par défaut, et une détection d'une instruction « durcissement collant » de la saisie utilisateur par l'intermédiaire du deuxième détecteur active l'opération de durcissement collant, dans lequel dans l'opération de durcissement par défaut la première source de lumière est automatiquement activée pendant une première période de temps prédéterminée après quoi la première source de lumière est automatiquement désactivée, et dans lequel dans l'opération de durcissement collant la première source de lumière est automatiquement activée pendant une deuxième période de temps prédéterminée après quoi la première source de lumière est automatiquement désactivée, et dans lequel la deuxième période de temps est plus courte que la première période de temps.

6. Dispositif dentaire d'irradiation lumineuse selon la revendication 5, comprenant en outre un troisième détecteur pour ajuster ou présélectionner la première période de temps.

7. Dispositif dentaire d'irradiation lumineuse selon la revendication 6, dans lequel le premier et le troisième détecteur comprennent chacun au moins un bouton poussoir ou capteur tactile, et dans lequel le deuxième détecteur comprend deux boutons poussoirs ou deux capteurs tactiles agencés sur des côtés opposés du dispositif dentaire d'irradiation lumineuse.

8. Dispositif dentaire d'irradiation lumineuse selon l'une quelconque des revendications 5 à 7, dans lequel l'instruction « démarrage de durcissement » et « durcissement collant » sont chacune basées sur une durée pendant laquelle une saisie utilisateur est maintenue sur le deuxième détecteur, dans lequel l'instruction « démarrage de durcissement » est associée à une première durée et l'instruction « durcissement collant » est associée à une deuxième durée différente.

9. Dispositif dentaire d'irradiation lumineuse selon l'une quelconque des revendications précédentes, dans lequel une détection d'une instruction « démarrage vidéo » de la saisie utilisateur par l'intermédiaire du premier détecteur déclenche l'enregistrement d'une vidéo par l'intermédiaire de la caméra, et une détection d'une instruction « arrêt caméra » de la saisie utilisateur par l'intermédiaire du premier détecteur amène le dispositif à commuter dans le mode non-caméra (N).

10. Dispositif dentaire d'irradiation lumineuse selon la revendication 2 ou 3, dans lequel dans le mode veille une détection d'une instruction « activation caméra » de la saisie utilisateur par l'intermédiaire du premier détecteur active le mode caméra (C), et la détection d'une instruction « démarrage de durcissement » de la saisie utilisateur par l'intermédiaire du premier détecteur active une opération de durcissement du dispositif dentaire d'irradiation lumineuse, dans lequel dans l'opération de durcissement la première source de lumière est activée.

11. Dispositif dentaire d'irradiation lumineuse selon l'une quelconque des revendications précédentes, comprenant en outre une deuxième source de lumière (4) pour émettre de la lumière blanche.

12. Dispositif dentaire d'irradiation lumineuse selon la revendication 11, dans lequel la première et la deuxième source de lumière (3, 4) et la caméra (2) sont agencées adjacentes l'une à l'autre et adjacentes à une extrémité d'une extrémité intrabuccale du dispositif dentaire d'irradiation lumineuse.

13. Dispositif dentaire d'irradiation lumineuse selon l'une quelconque des revendications précédentes, comprenant une interface de communication sans fil pour transmettre des données d'image capturées par la caméra à un réseau sans fil.
